# EUROPEAN PATENT APPLICATION

(11) **EP 4 617 556 A1**
(43) Date of publication of application: **17.09.2025**
(21) Application number: 23899999.9
(22) Date of filing: 06.12.2023
(51) Int. Cl.: F21V 8/00, G02B 6/00, B60J 1/00, B60Q 3/208, B60Q 3/62, F21S 8/00, F21V 7/00, F21W 106/00, F21W 107/10

(54) **LIGHT RAY INCIDENCE STRUCTURE, VEHICLE WINDOW, VEHICLE WINDOW PANEL, VEHICLE WINDOW PANEL ASSEMBLY, AND VEHICLE**

(30) Priority: 07.12.2022 CN 202211561724; 09.01.2023 CN 202310025008
(71) Applicant: Fuyao Glass Industry Group Co., Ltd., Fuqing, Fujian 350300 (CN)
(72) Inventor: LIN, Shengye, Fuqing, Fujian 350300 (CN); YE, Jiarong, Fuqing, Fujian 350300 (CN); LIN, Shou, Fuqing, Fujian 350300 (CN); CHEN, Hongwei, Fuqing, Fujian 350300 (CN); WANG, Zhixin, Fuqing, Fujian 350300 (CN); YE, Yunxiang, Fuqing, Fujian 350300 (CN)
(74) Representative: Tansini, Elio Fabrizio
(86) International application number: PCT/CN2023/136699
(87) International publication number: WO 2024/120425

(57) **Abstract**

A light incidence structure, a vehicle window, a vehicle window panel, a vehicle window panel assembly, and a vehicle. The light incidence structure is configured to guide light into an optical waveguide medium layer (2). The optical waveguide medium layer (2) has at least a first main surface (201) for light incidence. The light incidence structure includes a light introducing medium (1) and a light emitting source (3), wherein at least part of the light introducing medium (1) is formed on the first main surface (201) of the optical waveguide dielectric layer (2) by curing, such that at least part of the light introducing medium (1) is a part of the optical waveguide dielectric layer (2); the light introducing medium (1) has at least one incident surface (101) for light incidence; light emitted by the light emitting source (3) enter the light introducing medium (1) through the incident surface (101); and the light enter the optical waveguide dielectric layer (2) from the first main surface (201) after being refracted by the light introducing medium (1). The technical problems of a light incidence structure being complex, the light incidence efficiency being low, etc., of a vehicle window can be solved.

## Description

### CROSS-REFERENCE TO RELATED APPLICATIONS

This application claims priority to Chinese patent application No. 202211561724.4, entitled "LIGHT RAY INCIDENCE STRUCTURE, VEHICLE WINDOW, AND VEHICLE" filed with the China National Intellectual Property Administration on December 7, 2022, and Chinese patent application No. 202310025008.2, entitled "VEHICLE WINDOW PANEL, VEHICLE WINDOW PANEL ASSEMBLY, AND VEHICLE" filed with the China National Intellectual Property Administration on January 9, 2023, the contents of which are hereby incorporated by reference in their entireties.

### TECHNICAL FIELD

The present application relates to the field of vehicle window products, and particularly to a light incident structure, a vehicle window, a vehicle window panel, a vehicle window panel assembly, and a vehicle.

### BACKGROUND

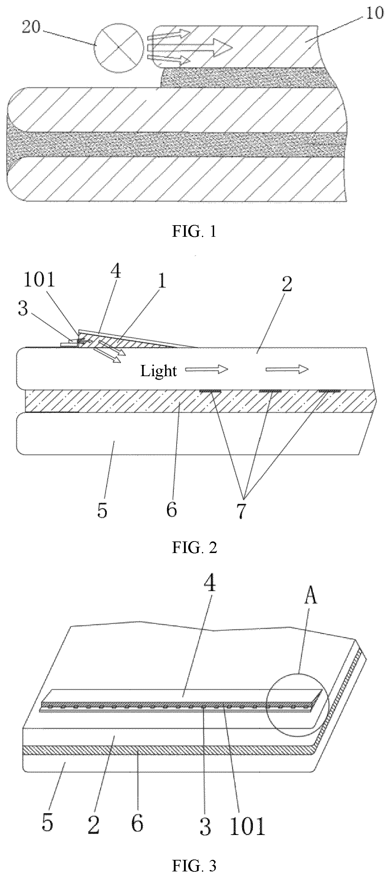

At present, as shown in FIG. 1, a light emitting source 20 is generally installed on glass 10 of a vehicle window, so that light is incident from an end face of the glass 10 into the glass 10, such as from an end portion or a cut face of the glass, or an end face of a local hole in the glass. The light propagates in the glass 10 (i.e., an optical waveguide medium layer) to achieve the effect of lighting the interior of the vehicle or enhancing the atmosphere effect in the vehicle.

In the related technology, a light guide block is fixed on a surface of the optical waveguide medium layer through a first adhesive layer. The light emitted by the light emitting source is incident on the light guide block, reflected by the light guide block, and enters the optical waveguide medium layer. The light is totally reflected in the optical waveguide medium layer, thereby propagating in the optical waveguide medium layer. In order to improve the light guiding effect, it is necessary to set a complex optical structure between the light guide block and the surface of the optical waveguide medium layer, such as multiple groups of asymmetric prisms with sizes in a millimeter or micron range, and asymmetric prisms in each group being arranged in a three-dimensional array or linearly, to assist the light to be incident on the optical waveguide medium layer, which makes it difficult to manufacture and install, but also occupies a part of space of the optical waveguide medium layer, affecting the luminous effect of the optical waveguide medium layer. In addition, the light guide block structure has a narrow use range, such as, it cannot be installed on curved glass. The process is difficult, and the stability of products cannot be guaranteed. Due to the matching issue between the light guide block and the light emitting angle of the light emitting source, along with the fact that the light must pass through the light guide block and the first adhesive layer before entering the optical waveguide medium layer, light loss occurs, resulting in low light incidence efficiency and poor product performance.

Currently, no effective solution has been proposed to address the problems of complex light incident structure and low light incident efficiency of vehicle windows in related technology.

Therefore, the applicant, relying on many years of experience and practice in related industries, proposes a light incident structure, a vehicle window, and a vehicle to overcome the defects of the prior art.

### SUMMARY

According to various embodiments of the present application, a light incident structure, a vehicle window, a vehicle window panel, a vehicle window panel assembly, and a vehicle are provided.

The present application provides the following solutions to achieve the purpose.

The present application provides a light incident structure, configured to guide light into an optical waveguide medium layer, the optical waveguide medium layer having at least a first main surface for light incidence, the light incident structure including:

A light introducing medium, at least portion of the light introducing medium being formed on the first main surface of the optical waveguide medium layer by curing, such that the at least portion of the light introducing medium is a part of the optical waveguide medium layer, and the light introducing medium having at least one incident surface for light incidence; and

A light emitting source, wherein light emitted by the light emitting source enters the light introducing medium through the incident surface, and the light enters the optical waveguide medium layer from the first main surface after being refracted by the light introducing medium.

In an embodiment, the light introducing medium is a protruding structure located on the first main surface of the optical waveguide medium layer.

In an embodiment, the first main surface is a flat surface or a curved surface.

In an embodiment, the optical waveguide medium layer has a second main surface opposite to the first main surface, a light reflection portion is disposed on the second main surface, and the light entering the optical waveguide medium layer is reflected at the light reflection portion.

In an embodiment, the light reflection portion is in a preset pattern.

In an embodiment, the incident surface is a flat surface, a convex mirror surface, or a concave mirror surface.

In an embodiment, a refractive index of the light introducing medium is equal to a refractive index of the optical waveguide medium layer or is within a preset range.

In an embodiment, a visible light transmittance of the light introducing medium is greater than or equal to a visible light transmittance of the optical waveguide medium layer.

In an embodiment, the light introducing medium is integrally formed with the optical waveguide medium layer.

In an embodiment, the light introducing medium is formed by curing a liquid with a viscosity on the optical waveguide medium layer.

In an embodiment, the light incidence structure further includes a cover plate, the cover plate has a first end and a second end opposite to each other, the first end of the cover plate is connected to the optical waveguide medium layer, the second end of the cover plate is inclined in a direction away from the optical waveguide medium layer, and the light introducing medium is located between the cover plate and the optical waveguide medium layer;

the incident surface is located between the second end of the cover plate and the optical waveguide medium layer, or the incident surface is located between a position adjacent to the second end of the cover plate and the optical waveguide medium layer.

In an embodiment, the light emitting source is disposed on the optical waveguide medium layer and adjacent to the incident surface.

The present application provides a vehicle window, including an optical waveguide medium layer, an outer glass layer, and a light incidence structure described above. The optical waveguide medium layer has a first main surface and a second main surface opposite to each other, the light incidence structure is disposed on the first main surface, and the outer glass layer is connected to the second main surface.

In an embodiment, the vehicle window further includes a first adhesive layer, the first adhesive layer being bonded between the outer glass layer and the second main surface.

The present application provides a vehicle window panel, including:
an optical waveguide medium layer having a first main surface and a second main surface opposite to each other, and a light reflection patterned layer being provided on the first main surface and/or the second main surface;
a light introducing medium including a first surface and a second surface disposed parallel to each other, the light introducing medium being closely connected to the first main surface through the first surface, and a connection portion of the first main surface connected to the first surface being parallel to the first surface;
a light emitting source located at one end of the light introducing medium, light from the light emitting source enters the light introducing medium, and the light introducing medium is configured to introduce the light from the light emitting source into the optical waveguide medium layer.

In an embodiment, the light introducing medium further includes a third surface and a fourth surface disposed opposite to each other, the light emitting source is disposed adjacent to the third surface, and the light from the light emitting source enters the light introducing medium through the third surface; and the third surface and the fourth surface are each disposed as a flat surface or a curved surface.

In an embodiment, an optical isolation layer and/or a thermal insulation film layer is disposed on the first main surface and/or the second main surface of the optical waveguide medium layer.

In an embodiment, the connection portion of the first main surface connected to the first surface has a transparent region, and the transparent region represents a connection portion of the first main surface without any additional treatment.

In an embodiment, the light introducing medium is integrally formed with the optical waveguide medium layer; or the light introducing medium and the optical waveguide medium layer are manufactured separately and assembled.

In an embodiment, the light introducing medium is fixedly connected to the optical waveguide medium layer via a curable liquid; the liquid is an optically clear adhesive or an optically clear resin; a refractive index of the liquid is in a range from 1.45 to 1.65; a visible light transmittance of the liquid is in a range from 90% to 99.9%; and a haze of the liquid is equal to or less than 5%.

In an embodiment, the light introducing medium and the optical waveguide medium layer are made of a same glass material; and/or the glass material is inorganic glass or organic glass.

In an embodiment, a refractive index of the light introducing medium is in a range from 1.45 to 1.65; a light transmittance of the light introducing medium is in a range from 80% to 99.9%; and a haze of the light introducing medium is equal to or less than 5%.

In an embodiment, the light introducing medium is connected to at least one side of the optical waveguide medium layer; and/or the light introducing medium is in a shape of a long strip or an arc strip.

In an embodiment, a light propagation distance of the optical waveguide medium layer is defined as b, a distance between the third surface and the fourth surface of the light introducing medium is defined as a, and a distance between the first surface of the light introducing medium and the first main surface of the optical waveguide medium layer is defined as h; where b = 20a to 30a, and a = 6h to 10h.

In an embodiment, h: a: b is equal to 1:8:200.

In an embodiment, the vehicle window panel further includes an outer glass layer; and the second main surface is connected to the outer glass layer via a first adhesive layer.

A vehicle window panel assembly includes the vehicle window panel, and a covering component configured to cove outside of the light introducing medium and the light emitting source.

The present application provides a vehicle, including the vehicle window, or the vehicle window panel.

Based on the above, the light incidence structure, the vehicle window, and the vehicle of the present application at least have the following characteristics and advantages.

The details of one or more embodiments of the present application are set forth in the following drawings and description. Other features, objectives, and advantages of the present application will become apparent from the description, drawings, and claims.

### BRIEF DESCRIPTION OF THE DRAWINGS

Drawings are only intended to illustrate and explain the present application, which do not limit the scope of the present application.
FIG. 1 is a schematic view of a light incident structure of a vehicle window glass in the prior art.
FIG. 2 is one of schematic views of light incident structure of the present application.
FIG. 3 is a three-dimensional view of the light incident structure of the present application.
FIG. 4 is a partial enlarged view of position A in FIG. 3.
FIG. 5 is a second schematic view of the light incident structure of the present application.
FIG. 6 is a third schematic view of the light incident structure of the present application.
FIG. 7 is a fourth schematic view of the light incident structure of the present application.
FIG. 8 is a fifth schematic view of the light incident structure of the present application.
FIG. 9 is a sixth schematic view of the light incident structure of the present application.
FIG. 10 is a schematic structural view of a vehicle window panel according to an embodiment of the present application.
FIG. 11 is a schematic structural view of a vehicle window panel according to another embodiment of the present application.
FIG. 12 is a schematic structural view of a vehicle window panel according to another embodiment of the present application.
FIG. 13 is a schematic structural view of a vehicle window panel according to yet another embodiment of the present application.
FIG. 14 is a schematic view showing the state of light being propagated inside an optical waveguide medium layer according to an embodiment of the present application.
FIG. 15 is a top view of the structure shown in FIG. 10.
FIG. 16 is a schematic structural view of a vehicle window panel assembly according to yet another embodiment of the present application.
FIG. 17 is a schematic structural view of a vehicle window panel assembly according to yet another embodiment of the present application.

Reference signs in the background: 10. glass; 20. light emitting source.

Reference signs in the present application: 1. light introducing medium; 101. incident surface; 102. first surface; 103. second surface; 104. fourth surface; 105. liquid; 2. optical waveguide medium layer; 201. first main surface; 202. second main surface; 203. light reflection patterned layer; 3. light emitting source; 4. cover plate; 5. outer glass layer; 6. first adhesive layer; 7. light reflection portion; 8. covering component; 9. second adhesive layer.

### DETAILED DESCRIPTION

Particular embodiments of the present application will now be described in detail with reference to the accompanying drawings in order to make the technical features, purposes and effects of the present application more clear.

### Embodiment 1

As shown in FIGS. 2 to 4, the present application provides a light incidence structure, which is configured to guide light into an optical waveguide medium layer 2. The optical waveguide medium layer 2 has at least a first main surface for light incidence. The light incidence structure includes a light introducing medium 1 and a light emitting source 3. At least portion of the light introducing medium 1 is formed on the first main surface of the optical waveguide medium layer 2 by curing, such that the at least portion of the light introducing medium 1 is a part of the optical waveguide medium layer 2. The light introducing medium 1 has at least one incident surface 101 for light incidence. The light emitted by the light emitting source 3 enters the light introducing medium 1 through the incident surface 101, and the light enters the optical waveguide medium layer 2 from the first main surface after being refracted by the light introducing medium 1. In the present application, since the light introducing medium 1 is disposed on the first main surface of the optical waveguide medium layer 2 by curing, under the premise of ensuring the smooth propagation of light, the interface structure between the light introducing medium 1 and the optical waveguide medium layer 2 is simple and the forming process is simple. In addition, since no additional connecting structure is disposed between the light introducing medium 1 and the optical waveguide medium layer 2, the incident efficiency of light can be greatly improved and light loss can be prevented, thereby effectively improving the lighting and atmosphere effects in the vehicle.

In an optional embodiment of the present application, as shown in FIGS. 2 to 4, the light introducing medium 1 is a protruding structure located on the first main surface of the optical waveguide medium layer 2, the incident surface 101 is located on a side of the protruding structure, and the incident surface 101 is connected to the first main surface of the optical waveguide medium layer 2. It is precisely because the light introducing medium 1 is a protruding structure, light can be refracted inside the protruding structure, and the refracted light can enter the optical waveguide medium layer 2.

In the present application, since the light introducing medium 1 is located on the first main surface of the optical waveguide medium layer 2 (i.e., the surface of the optical waveguide medium layer 2), the light emitted by the light emitting source 3 can enter the optical waveguide medium layer 2 through the surface of the optical waveguide medium layer 2, which replaces the incident mode of light emitted by the light emitting source 3 entering the optical waveguide medium layer 2 (i.e., glass) through an end face or a cut face of the optical waveguide medium layer 2, thereby simplifying the structure and saving costs while ensuring the incident efficiency of light.

Furthermore, the first main surface of the optical waveguide medium layer 2 can be but is not limited to a flat surface or a curved surface. Since the light introducing medium 1 is formed directly on the optical waveguide medium layer 2, there is no need to consider whether the first main surface of the optical waveguide medium layer 2 can be adaptively connected with the light introducing medium 1. In the cases of both a flat surface and a curved surface, the light introducing medium 1 can be disposed on the first main surface of the optical waveguide medium layer 2, and the incident efficiency of light can be ensured. However, before forming the light introducing medium 1, it is necessary to ensure that the position on the optical waveguide medium layer 2 where the light introducing medium 1 is to be disposed is a transparent region, and the transparent region may be reserved according to a preset area of the light introducing medium 1. Subsequently, the light introducing medium 1 is disposed in the transparent region. As such, it ensures that light can smoothly enter the optical waveguide medium layer 2 through the light introducing medium 1. The position and the area of the light introducing medium 1 on the first main surface of the optical waveguide medium layer 2 can be set according to actual requirements of products, which are not specifically limited here.

In an optional embodiment of the present application, as shown in FIG. 2, the optical waveguide medium layer 2 has a second main surface opposite to the first main surface, and a light reflection portion 7 is disposed on the second main surface. After entering the optical waveguide medium layer 2, the light is irradiated on the light reflection portion 7, and the light is reflected at the location where it is extracted by the light reflection portion 7, thereby achieving the lighting and atmosphere effects.

Furthermore, the light reflection portion 7 can cover the second main surface of the optical waveguide medium layer 2. The light reflection portion 7 can be in a preset pattern, and different patterns can be disposed as needed. The light enters the optical waveguide medium layer 2 and propagates in the optical waveguide medium layer 2. The propagated light is extracted by the light reflection portion 7 after being irradiated on the light reflection portion 7 to cause the light reflection portion 7 to be in a luminous state, thereby achieving the lighting and atmosphere effects.

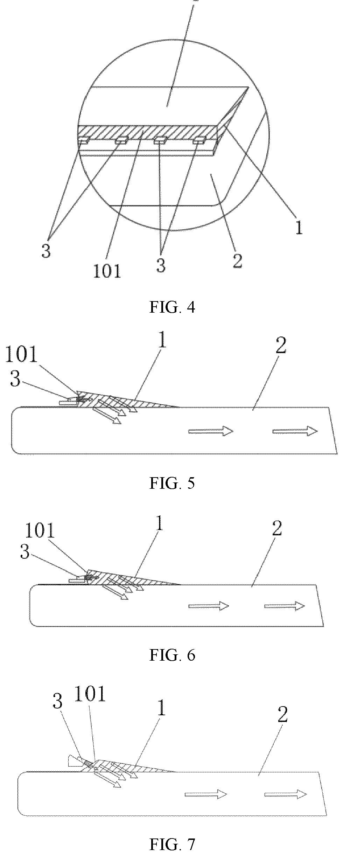

In an optional embodiment of the present application, as shown in FIG. 2, the incident surface 101 of the light introducing medium 1 can be a flat surface. Alternatively, as shown in FIGS. 5 and 6, the incident surface 101 of the light introducing medium 1 can be a convex mirror surface, or a concave mirror surface, or other structural surfaces with optical properties, as long as the light emitted by the light emitting source 3 can smoothly enter the light introducing medium 1 and can smoothly enter the optical waveguide medium layer 2 after being refracted inside the light introducing medium 1.

Furthermore, as shown in FIGS. 2 to 4, the light introducing medium 1 can be disposed as a long strip-shaped protruding structure according to a size of the optical waveguide medium layer 2, and the light emitting source 3 is disposed on the optical waveguide medium layer 2 and adjacent to the incident surface 101. A plurality of the light emitting sources 3 can be disposed, and the light emitting sources 3 can be evenly distributed at intervals along a length direction of the light introducing medium 1 to ensure the overall luminous effect of the optical waveguide medium layer 2. The specific number and location of the light emitting sources 3 can be disposed according to the length of the light introducing medium 1, as long as the light emitted by each of the light emitting sources 3 can be fully distributed in the optical waveguide medium layer 2.

Furthermore, as shown in FIGS. 2 and 5 to 9, an incident angle of the light emitted by the light emitting source 3 relative to the incident surface 101 can be set according to the optical structure of the incident surface 101. Preferably, the light emitted by the light emitting source 3 is incident into the light introducing medium 1 at an angle perpendicular to the incident surface 101.

In an optional embodiment of the present application, a refractive index of the light introducing medium 1 is equal to a refractive index of the optical waveguide medium layer 2 or is within a preset range. A visible light transmittance of the light introducing medium 1 is greater than or equal to a visible light transmittance of the optical waveguide medium layer 2.

Furthermore, the preset range of the refractive index of the light introducing medium 1 is 1.35 to 1.65. Preferably, the preset range of the refractive index of the light introducing medium 1 is 1.48 to 1.55.

Furthermore, a difference between the refractive index of the light introducing medium 1 and the refractive index of the optical waveguide medium layer 2 is within the range of ±0.05.

Furthermore, the visible light transmittance of the light introducing medium 1 is in a range from 85% to 99.9%. Preferably, the visible light transmittance of the light introducing medium 1 is in a range from 95% to 99.9%.

Furthermore, the visible light transmittance of the light introducing medium 1 is equal to, or greater by 3% than the visible light transmittance of the optical waveguide medium layer 2.

Furthermore, a haze of the light introducing medium 1 is less than or equal to 5%. Preferably, the haze of the light introducing medium 1 is less than or equal to 2%.

In the present application, by setting the refractive index, the visible light transmittance, and the haze of the light introducing medium 1, the light introducing medium 1 has optical properties close to those of the optical waveguide medium layer 2, thereby greatly improving the efficiency of light incident into the optical waveguide medium layer 2, and thus avoiding light loss.

In an optional embodiment of the present application, the light introducing medium 1 can be integrally formed with the optical waveguide medium layer 2. Alternatively, the light introducing medium 1 and the optical waveguide medium layer 2 can be made of a same material, or made of materials with similar refractive indexes, optical transmittance, hazes, and other optical properties, so that the light introducing medium 1 and the optical waveguide medium layer 2 have the same or equivalent optical properties, and the light introducing medium 1 and the optical waveguide medium layer 2 can be taken as the same medium, thereby obtaining the best incident efficiency of light.

In another optional embodiment of the present application, the light introducing medium 1 is formed by curing a liquid with a viscosity on the optical waveguide medium layer 2. The liquid that can be used includes but is not limited to optically clear adhesive (OCA), liquid optically clear adhesive (LOCA), or optically clear resin (OCR). The light introducing medium 1 is formed through curing with light such as UV, or heat. The light introducing medium 1 can be formed by: injecting, such as injecting in an extrusion mode, injecting in a drip mode, etc., a material into a pre-designed mold mounted on the surface of the optical waveguide medium layer 2, alternatively coating a material on the surface of the optical waveguide medium layer 2 in advance, and then pressing, removing the mold, and removing the excessive material. Alternatively, the light introducing medium 1 is formed on the optical waveguide medium layer 2 by 3D printing. Alternatively, the light introducing medium 1 is formed on the optical waveguide medium layer 2 by coating, stacking, etc. The light introducing medium 1 can be formed with many specific options or combinations thereof, which are not limited here.

For example, the light introducing medium 1 can be formed by curing a liquid optically clear adhesive (LOCA) with a viscosity of 2500 cps to 4500 cps on the optical waveguide medium layer 2.

It should be noted that, no matter the light introducing medium 1 and the optical waveguide medium layer 2 are integrally formed, or the light introducing medium 1 is formed on the optical waveguide medium layer 2 by curing, it can be considered that the light introducing medium 1 is directly formed on the optical waveguide medium layer 2. Preferably, no additional layer structure is disposed between the light introducing medium 1 and the optical waveguide medium layer 2, and there is no need to connect the light introducing medium 1 to the optical waveguide medium layer 2 by additional bonding process, so that the interface structure between the light introducing medium 1 and the optical waveguide medium layer 2 is simple and the forming process is simpler, and the polarization state of light is not changed when the light enters the optical waveguide medium layer 2 from the light introducing medium 1.

Furthermore, after the light introducing medium 1 is formed on the optical waveguide medium layer 2, a covering member (not shown in the Figures) can be disposed on the entire surface of the optical waveguide medium layer 2. The optical waveguide medium layer 2 and the light introducing medium 1 can be covered by the covering member, thereby protecting, and beautifying the appearance.

In an optional embodiment of the present application, as shown in FIGS. 2 to 4, the light incidence structure further includes a cover plate 4. The cover plate 4 has a first end and a second end opposite to each other, the first end of the cover plate 4 is connected to the optical waveguide medium layer 2, the second end of the cover plate 4 is inclined in a direction away from the optical waveguide medium layer 2, and the light introducing medium 1 is located between the cover plate 4 and the optical waveguide medium layer 2. The incident surface 101 is located between the second end of the cover plate 4 and the optical waveguide medium layer 2. Alternatively, the incident surface 101 is located between a position adjacent to the second end of the cover plate 4 and the optical waveguide medium layer 2. During the formation of the light introducing medium 1, the cover plate 4 can be provided in advance, and then the light introducing medium 1 is formed between the cover plate 4 and the optical waveguide medium layer 2. The cover plate 4 plays a certain role in shaping the light introducing medium 1, thereby ensuring the smooth formation of the light introducing medium 1. The shape and size of the cover plate 4 can be set according to the shape and size of the light introducing medium 1 to be formed. In the present application, there is no limitation on whether the cover plate 4 is made of a transparent material. Preferably, the cover plate 4 is made of a non-black material.

In a specific embodiment of the present application, as shown in FIG. 2, a cross section of the light introducing medium 1 is a right-angled triangle, the part of the light introducing medium 1 corresponding to the longer right-angled side of the light introducing medium 1 is in contact with the first main surface of the optical waveguide medium layer 2, and the part of the light introducing medium 1 corresponding to the shorter right-angled side of the light introducing medium 1 is the incident surface 101 of the light introducing medium 1. In this case, the incident surface 101 of the light introducing medium 1 is perpendicular to the first main surface of the optical waveguide medium layer 2, and the cover plate 4 is disposed on the hypotenuse of the light introducing medium 1. An angle between the longer right-angled side and the hypotenuse of the light introducing medium 1 is in a range from 4° to 10°, preferably 4° to 7°. A length of the shorter right-angled side of the light introducing medium 1 is less than or equal to 4 mm. In the present embodiment, the refractive index of the optical waveguide medium layer 2 can be 1.51, and the visible light transmittance (TL) of the optical waveguide medium layer 2 can be 91.5%. The first adhesive layer 6 is ethylene polyvinyl acetate. The light introducing medium 1 is made of UV-cured liquid optically clear adhesive (LOCA) having a refractive index of 1.51 and a visible light transmittance (TL) greater than or equal to 91%. The light introducing medium 1 guides the light emitted by the light emitting source 3 to enter the optical waveguide medium layer 2. The incident light continues to propagate in the optical waveguide medium layer 2. During propagating in the optical waveguide medium layer 2, the incident light is irradiated on the light reflection portion 7 and is reflected at the light reflection portion 7, thereby achieving effects such as luminescence and displaying patterns.

Preferably, the visible light transmittance (TL) of the light introducing medium 1 is 99%.

In a specific embodiment of the present application, as shown in FIG. 5, the cross section of the light introducing medium 1 is in a triangle-like shape, and the incident surface 101 of the light introducing medium 1 is a concave mirror surface. In the present embodiment, it is necessary to ensure that the refractive index of the light introducing medium 1 is equal to or close to the refractive index of the optical waveguide medium layer 2. Preferably, a difference between the refractive index of the light introducing medium 1 and the refractive index of the optical waveguide medium layer 2 is within the range of ±0.05. The visible light transmittance of the light introducing medium 1 is greater than or equal to the visible light transmittance of the optical waveguide medium layer 2. Preferably, the visible light transmittance of the light introducing medium 1 is equal to or greater by 3% than that of the optical waveguide medium layer 2.

In a specific embodiment of the present application, as shown in FIG. 6, the cross section of the light introducing medium 1 is in a triangle-like shape, and the incident surface 101 of the light introducing medium 1 is a convex mirror surface. In the present embodiment, it is necessary to ensure that the refractive index of the light introducing medium 1 is equal to or close to the refractive index of the optical waveguide medium layer 2. Preferably, a difference between the refractive index of the light introducing medium 1 and the refractive index of the optical waveguide medium layer 2 is within the range of ±0.05. The visible light transmittance of the light introducing medium 1 is greater than or equal to the visible light transmittance of the optical waveguide medium layer 2. Preferably, the visible light transmittance of the light introducing medium 1 is equal to or greater by 3% than that of the optical waveguide medium layer 2.

Certainly, the incident surface 101 of the light introducing medium 1 can be a free-form curved surface. It is necessary to ensure that the light rays emitted by the light emitting source 3 are concentrated into basically consistent directions. That is, the light rays are all distributed within an angle range of ±2.5°.

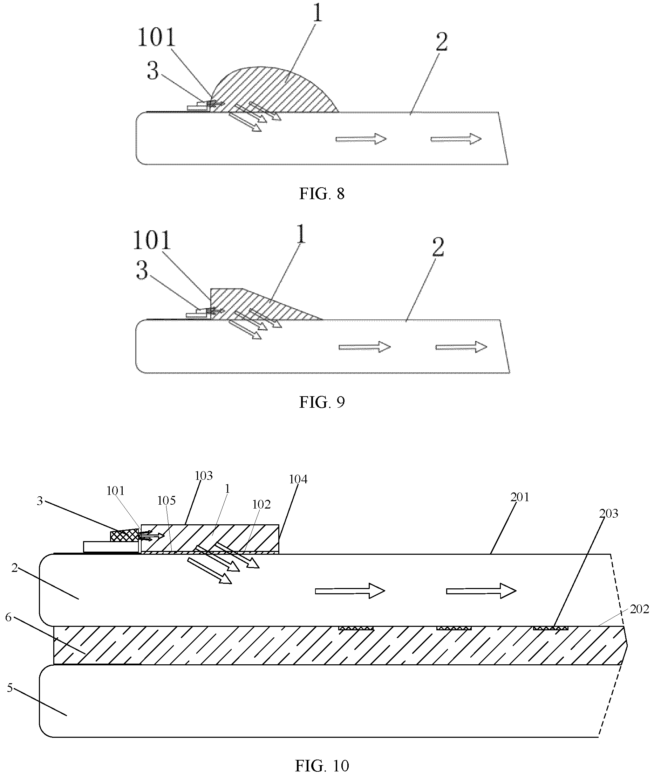

In a specific embodiment of the present application, as shown in FIG. 8, the cross section of the light introducing medium 1 is in a semi-elliptical shape, the part of the light introducing medium 1 corresponding to the straight edge of the light introducing medium 1 is connected to the first main surface of the optical waveguide medium layer 2, and the incident surface 101 of the light introducing medium 1 is adjacent to the position where the light introducing medium 1 is connected to the first main surface of the optical waveguide medium layer 2. In the present embodiment, it is necessary to ensure that the refractive index of the light introducing medium 1 is equal to or close to the refractive index of the optical waveguide medium layer 2. Preferably, a difference between the refractive index of the light introducing medium 1 and the refractive index of the optical waveguide medium layer 2 is within the range of ±0.05. The visible light transmittance of the light introducing medium 1 is greater than or equal to the visible light transmittance of the optical waveguide medium layer 2. Preferably, the visible light transmittance of the light introducing medium 1 is equal to or greater by 3% than that of the optical waveguide medium layer 2.

In a specific embodiment of the present application, as shown in FIG. 9, the cross section of the light introducing medium 1 is a right-angled trapezoid, the part of the light introducing medium 1 corresponding to the longer bottom side of the light introducing medium 1 is connected to the first main surface of the optical waveguide medium layer 2, and the incident surface 101 of the light introducing medium 1 is a flat surface corresponding to the waist with right angles to both bases. In the present embodiment, it is necessary to ensure that the refractive index of the light introducing medium 1 is equal to or close to the refractive index of the optical waveguide medium layer 2. Preferably, a difference between the refractive index of the light introducing medium 1 and the refractive index of the optical waveguide medium layer 2 is within the range of ±0.05. The visible light transmittance of the light introducing medium 1 is greater than or equal to the visible light transmittance of the optical waveguide medium layer 2. Preferably, the visible light transmittance of the light introducing medium 1 is equal to or greater by 3% than that of the optical waveguide medium layer 2.

Furthermore, the visible light transmittance of the light introducing medium 1 is greater than or equal to the visible light transmittance of the optical waveguide medium layer 2. Preferably, the visible light transmittance of the light introducing medium 1 is equal to or greater by 5% than that of the optical waveguide medium layer 2.

In a specific embodiment of the present application, as shown in FIG. 7, the cross section of the light introducing medium 1 is a non-right triangle, the part of the light introducing medium 1 corresponding to the first side (i.e., the longest side of three sides) of the light introducing medium 1 is connected to the first main surface of the optical waveguide medium layer 2, and the part corresponding to the second side (i.e., a shorter side of the three sides) of the light introducing medium 1 is the incident surface 101 of the light introducing medium 1. In this case, by adjusting the angle of the light emitting source 3, the light emitted by the light emitting source 3 can be incident into the light introducing medium 1 as perpendicularly as possible to the incident surface 101 of the light introducing medium 1. In the present embodiment, it is necessary to ensure that the refractive index of the light introducing medium 1 is equal to or close to the refractive index of the optical waveguide medium layer 2. Preferably, a difference between the refractive index of the light introducing medium 1 and the refractive index of the optical waveguide medium layer 2 is within the range of ±0.05. The visible light transmittance of the light introducing medium 1 is greater than or equal to the visible light transmittance of the optical waveguide medium layer 2. Preferably, the visible light transmittance of the light introducing medium 1 is equal to or greater by 3% than that of the optical waveguide medium layer 2.

The light incidence structure of the present application at least has the following characteristics and advantages.
1. According to the light incidence structure, the light introducing medium 1 is firmly disposed on the optical waveguide medium layer 2, which can greatly improve the incident efficiency of light and prevent light loss, thereby effectively improving the lighting and atmosphere effects in the vehicle.
2. According to the light incidence structure, the light introducing medium 1 and the optical waveguide medium layer 2 have the same or similar optical properties, which can greatly improve the efficiency of light incident into the optical waveguide medium layer 2.
3. According to the light incidence structure, the surface of the optical waveguide medium layer 2 (i.e., the first main surface) can be set to either a flat surface or a curved surface, with a wide applicability.
4. The light incidence structure has a simple structure and a small occupied area, and is formed by a simple process, thereby saving the space, being convenient for arrangement and use, and being suitable for industrial mass production.
5. The light incidence structure can guide the light to enter the optical waveguide medium layer 2 from the surface of the optical waveguide medium layer 2, which replaces the incident mode that the light emitted by the light emitting source 3 enters the optical waveguide medium layer 2 from an end face or a cut face of the optical waveguide medium layer 2, thereby simplifying the structure, reducing the weight of product, saving costs, conserving energy and reducing emissions under the premise of ensuring the incident efficiency of light.

### Embodiment 2

As shown in FIGS. 2 and 3, the present application provides a vehicle window, which includes the optical waveguide medium layer 2, an outer glass layer 5, and the light incidence structure described above. The optical waveguide medium layer 2 has a first main surface and a second main surface opposite to each other. The light incidence structure is disposed on the first main surface of the optical waveguide medium layer 2. The outer glass layer 5 is connected to the second main surface of the optical waveguide medium layer 2.

In an optional embodiment of the present application, as shown in FIG. 2 and FIG. 3, the vehicle window further includes a first adhesive layer 6, and the first adhesive layer 6 is bonded between the outer glass layer 5 and the second main surface of the optical waveguide medium layer 2.

Furthermore, as shown in FIG. 2, the light reflection portion 7 is located between the first adhesive layer 6 and the second main surface of the optical waveguide medium layer 2, and the light reflection portion 7 is firmly bonded to the first adhesive layer 6.

Furthermore, the optical waveguide medium layer 2 and the outer glass layer 5 are made of the same material. That is, the optical waveguide medium layer 2 and the outer glass layer 5 are both made of glass. Therefore, in the present application, a two-piece sandwich structure is formed after molding. By setting the light incidence structure, the two-piece sandwich structure can replace the existing three-piece sandwich structure as shown in FIG. 1. Thus, there is no need to introduce light through the end face or cut face of the glass, which can avoid the setting of the third glass layer, simplify the structure of product, and reduce the weight of product.

### Embodiment 3

The present application provides a vehicle including the vehicle window described above.

### Embodiment 4

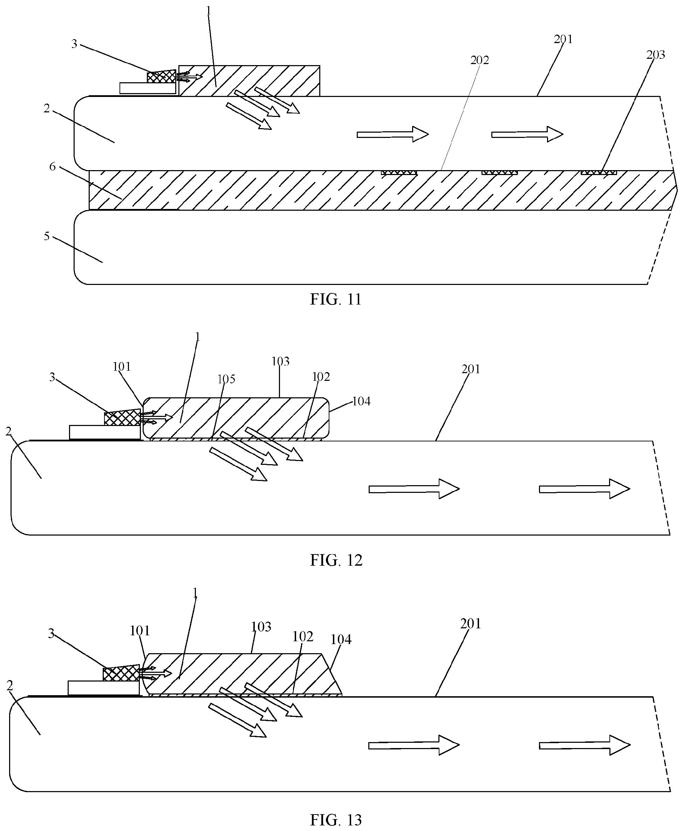

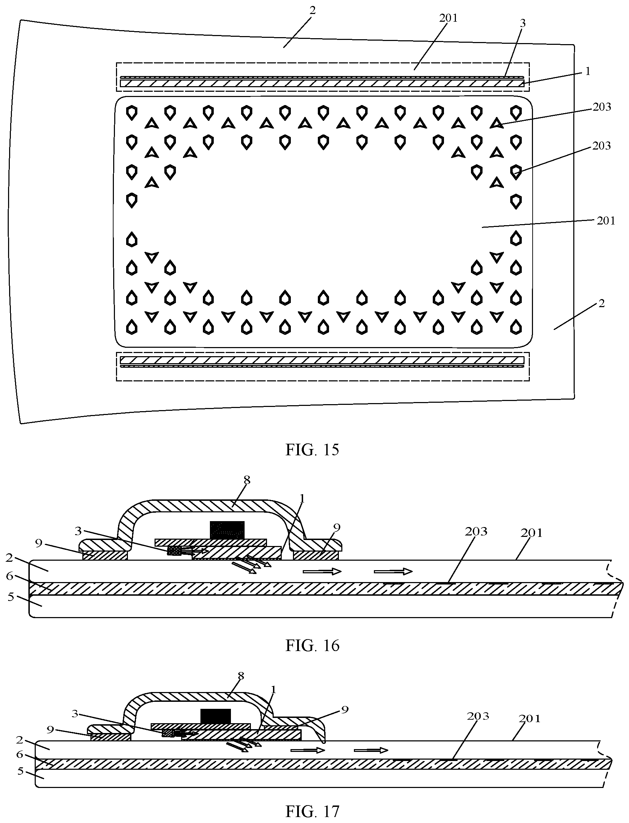

Referring to FIGS. 10, 11 and 15, FIG. 10 shows a schematic structural view of a vehicle window panel according to an embodiment of the present application, FIG. 15 shows a top view of the structure shown in FIG. 10, and FIG. 11 shows a schematic structural view of the vehicle window panel according to another embodiment of the present application. An embodiment of the present application provides a vehicle window panel, which includes an optical waveguide medium layer 2, a light introducing medium 1, and a light emitting source 3. Optionally, the optical waveguide medium layer 2 includes but is not limited to an optical waveguide glass layer. The optical waveguide medium layer 2 has a first main surface 201 and a second main surface 202 opposite to each other. As shown in FIG. 11, a light reflection patterned layer 203 is provided on the first main surface 201 or the second main surface 202; alternatively, the light reflection patterned layer 203 is provided on each of the first main surface 201 and the second main surface 202. The light introducing medium 1 includes a first surface 102 and a second surface 103 disposed parallel to each other. The light introducing medium 1 is closely connected to the first main surface 201 through the first surface 102, and a connection portion of the first main surface 201 connected to the first surface 102 is parallel to the first surface 102. The light emitting source 3 is, for example, an LED light-emitting component, which is located at one end of the light introducing medium 1. The light from the light emitting source 3 enters the light introducing medium 1, and the light introducing medium 1 is configured to introduce the light from the light emitting source 3 into the optical waveguide medium layer 2.

It should be noted that when it is referred to that the first surface 102 and the first main surface 201 are closely connected, it can mean that the first surface 102 and the first main surface 201 are closely connected without an additional layer between them, or the first surface 102 and the first main surface 201 are closely connected by bonding, locking, etc. with an additional layer between them.

The light reflection patterned layer 203 can be arranged as an entirety on the second main surface 202. Alternatively, the light reflection patterned layer 203 can be arranged in any pattern form, including but being not limited to, multiple triangles, multiple water drop shapes, multiple stars, multiple quadrilaterals, multiple circles, multiple ellipses, or other regular or irregular shapes. The specific shape can be flexibly adjusted and designed according to actual needs.

According to the vehicle window panel, the light introducing medium 1 includes the first surface 102 and the second surface 103 disposed parallel to each other, the light introducing medium 1 is closely connected to the first main surface 201 through the first surface 102, and the connection portion of the first main surface 201 connected to the first surface 102 is parallel to the first surface 102. As such, when the light from the light emitting source 3 enters the light introducing medium 1, the light introducing medium 1 can guide the light from the light emitting source 3 to be incident into the optical waveguide medium layer 2, so that the light propagates in the optical waveguide medium layer 2. The propagated light is reflected when irradiated on the light reflection patterned layer 203 prepared in advance, and the light reflection patterned layer 203 is illuminated to achieve the lighting or atmosphere effects. Accordingly, by the cooperation of the light reflection patterned layer 203 with the light introducing medium 1 and the light waveguide medium layer 2, the atmospheric or lighting effects are achieved. In addition, the structure of the light introducing medium 1 is simplified, the processing difficulty is reduced, and the production efficiency is improved. The installation on the first main surface 201 of the optical waveguide medium layer 2 has a good stability, and the incident efficiency of light from the light emitting source 3 is improved.

In addition, compared to introducing light from the end face, such as the end portion or the cut face, of the third glass layer in the related technology, the present light introducing medium 1 achieves the same light introducing effect.

In addition, under achieving the same function, the two-piece sandwich structure product with the light introducing medium 1 can replace the three-piece sandwich product in the related technology, thereby reducing the weight of product, reducing the utilization of resource, and greatly reducing the manufacturing costs.

Further, the light reflection patterned layer 203 can be flexibly disposed according to actual needs. The light reflection patterned layer 203 can be disposed on the first main surface 201 or on the second main surface 202; alternatively, the light reflection patterned layer 203 can be disposed on each of the first main surface 201 and the second main surface 202, so that the light can be reflected to the interior of the vehicle, thereby achieving lighting or atmosphere effects.

Optionally, the first surface 102 and the second surface 103 each include but are not limited to flat surfaces, curved surfaces, arc-shaped surfaces, or surfaces with other regular or irregular shapes which are designed to be parallel to each other, which are not limited here and can be flexibly adjusted and disposed according to actual needs.

In order to make the connection portion of the first main surface 201 to be closely connected to the first surface 102, the connection portion of the first main surface 201 and the first surface 102 are adapted to each other. Specifically, when the first surface 102 is a flat surface, the connection portion of the first main surface 201 is disposed to a flat surface accordingly. When the first surface 102 is an arc-shaped surface, the connection portion of the first main surface 201 is disposed to an arc-shaped surface accordingly. When the first surface 102 is a curved surface, the connection portion of the first main surface 201 is disposed to a curved surface accordingly.

Referring to FIG. 12 and FIG. 13, FIG. 12 and FIG. 13 are schematic structural views showing the vehicle window panels according to another two embodiments of the present application. The difference between FIG. 12 and FIG. 13 lies in that a fourth surface 104 is disposed in a different manner. In an embodiment, the light introducing medium 1 further includes a third surface (i.e., the incident surface 101 in Embodiment 1) and a fourth surface 104 disposed opposite to each other. The light emitting source 3 is disposed adjacent to the third surface, and the light from the light emitting source 3 enters the light introducing medium 1 through the third surface. The third surface and the fourth surface 104 are both disposed as flat surfaces, arc-shaped surfaces, or surfaces with other regular or irregular shapes, which can be flexibly adjusted and set according to actual needs and are not limited here. In addition, the third surface and the fourth surface 104 can be designed to be parallel to each other; alternatively, the third surface and the fourth surface 104 can be designed to be not parallel to each other, which can be flexibly adjusted and set according to actual needs and is not limited here. During operation, since the light emitting source 3 is disposed adjacent to the third surface, when the light emitting source 3 emits light, the emitted light is incident toward the third surface, enters the light introducing medium 1, and is introduced into the optical waveguide medium layer 2 by the light introducing medium 1.

Optionally, the fourth surface 104 can be perpendicular to the first main surface 201, as shown in FIG. 12. Alternatively, the fourth surface 104 can be disposed at an included angle to the first main surface 201 as shown in FIG. 13, and the included angle includes but is not limited to an acute angle or an obtuse angle.

Referring to FIG. 10, in an embodiment, an optical isolation layer and/or a thermal insulation film layer is disposed on the first main surface 201 and/or the second main surface 202 of the optical waveguide medium layer 2. As such, an optical isolation layer, such as a plated film layer or a chemical coating having functions of blocking UV, blocking infrared, anti-reflection, etc., can be disposed on the first main surface 201 and/or the second main surface 202. The optical isolation layer can isolate harmful light bands during exposure to sunlight, and reduce the damage of harmful light to the interior and personnel in the vehicle. A thermal insulation film layer, such as a LOW-E thermal insulation film layer can also be disposed, which can effectively isolate the external heat outside the vehicle from entering the vehicle in summer, and effectively preserve the heat inside the vehicle in winter.

Referring to FIG. 10, in an embodiment, the connection portion of the first main surface 201 connected to the first surface 102 has a transparent region. The transparent region refers to the connection portion of the first main surface 201 without any additional treatment. Thus, it needs to ensure that no additional functional film layer is disposed in the transparent region. If any additional functional film layer similar to the above-described layers is present in the transparent region, the additional functional film layer needs to be removed from the transparent region to ensure that the light introducing medium 1 is in direct contact with the first main surface 201.

Referring to FIG. 10 or FIG. 11, FIG. 11 shows a schematic structural view of a vehicle window panel according to another embodiment of the present application. Compared to FIG. 10, in the structure shown in FIG. 11, the light introducing medium 1 is directly connected to the optical waveguide medium layer 2 to form for example an integrated structure, which is obtained by integrated molding. Certainly, the light introducing medium 1 and the optical waveguide medium layer 2 can be manufactured separately and assembled with each other.

The light introducing medium 1 and the optical waveguide medium layer 2 can be made of the same material or different materials, which can be flexibly adjusted and set according to actual needs and is not limited here.

Optionally, when properties such as refractive index and transmittance of the light introducing medium 1 and the optical waveguide medium layer 2 are the same, the light introducing medium 1 for light incidence and the optical waveguide medium layer 2 can be understood as the same medium for the light propagation, so that the light is well incident into the optical waveguide medium layer 2 from the light introducing medium 1.

Referring to FIG. 10 or FIG. 11, in an embodiment, when the light introducing medium 1 and the optical waveguide medium layer 2 are manufactured separately and assembled with each other, the light introducing medium 1 and the first main surface 201 of the optical waveguide medium layer 2 have the same profile, such as flat surfaces, single arc surfaces, or hyperboloids with crossed arc surfaces, etc. The secondary manufactured light introducing medium 1 can be formed by molding such as hot-pressing molding or hot gravity molding, or cold forming to have a profile consistent with the profile of the assembly region of the optical waveguide medium layer 2. Subsequently, the light introducing medium 1 and the first main surface 201 of the optical waveguide medium layer 2 are connected to each other.

Referring to FIG. 10, in an embodiment, when the light introducing medium 1 and the optical waveguide medium layer 2 are manufactured separately and assembled with each other, a liquid 105 with a specific viscosity can be used. The liquid 105 can be cured by light or heat to connect the light introducing medium 1 to the optical waveguide medium layer 2. Specifically, the liquid 105 can be but is not limited to, optically clear adhesive (OCA), liquid optically clear adhesive (LOCA), optically clear resin (OCR), etc.

Optionally, the refractive index of the liquid 105 material is in a range from 1.45 to 1.65, preferably 1.48 to 1.55. The visible light transmittance (TL) of the liquid 105 material is in a range from 90% to 99.9%, preferably 97% to 99.9%. The haze of the liquid 105 material is equal to or less than 5%, preferably equal to or less than 1%.

In a specific embodiment, the liquid 105, the light introducing medium 1, and the optical waveguide medium layer 2 all have identical refractive index, transmittance (TL) and haze, so that light can be better incident into the optical waveguide medium layer 2 from the light introducing medium 1.

In an embodiment, the light introducing medium 1 and the optical waveguide medium layer 2 are made of, for example, the same glass material or different glass materials, which is not limited here. Optionally, the glass material includes but is not limited to inorganic glass or organic glass.

Specifically, the light introducing medium 1 can be made of the same glass material as the optical waveguide medium layer 2. For example, the light introducing medium 1 is formed by directly cutting a flat material, and then firmly connected to the connection portion of the optical waveguide medium layer 2 with the same profile by mold thermoforming. As such, light can be better incident into the optical waveguide medium layer 2 from the light introducing medium 1.

In an embodiment, the refractive index of the light introducing medium 1 is in a range from 1.45 to 1.65; and/or the light transmittance of the light introducing medium 1 is in a range from 80% to 99.9%; and/or the haze of the light introducing medium 1 is equal to or less than 5%.

Specifically, the refractive index of the light introducing medium 1 is in a range from 1.48 to 1.55; the light transmittance of the light introducing medium 1 is in a range from 85% to 99.9%; and the haze of the light introducing medium 1 is equal to or less than 1%.

In an embodiment, the light introducing medium 1 is connected to the circumference, one side, two sides, or three sides of the optical waveguide medium layer 2, or any other region that can be constructed.

Referring to FIG. 10 and FIG. 15, in an embodiment, the light introducing medium 1 is in a shape of a long strip or an arc strip. As such, the light introducing medium 1 has a single shape, which does not need to be made into a wedge shape or a special optical structure.

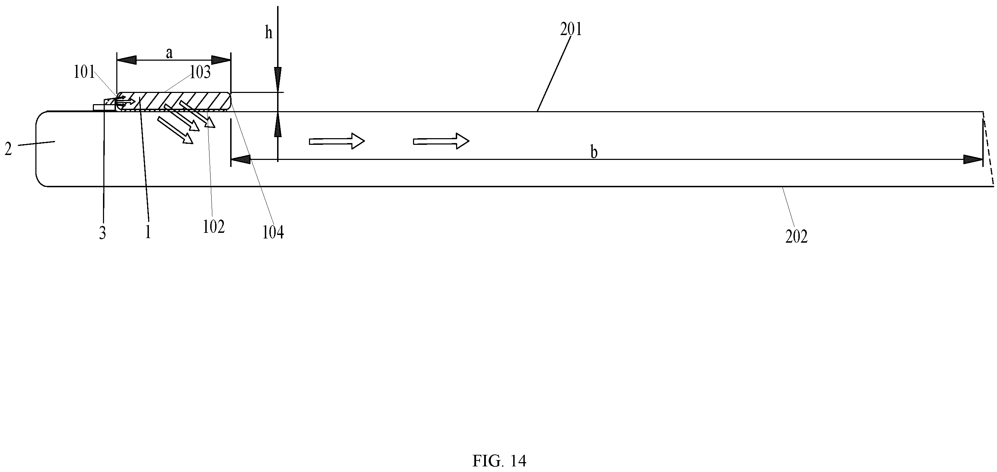

Referring to FIG. 14, in an embodiment, a light propagation distance of the optical waveguide medium layer 2 is defined as b, a distance between the third surface and the fourth surface of the light introducing medium 1 is defined as a, and a distance between the first surface 102 of the light introducing medium 1 and the first main surface 201 of the optical waveguide medium layer 2 is defined as h; where b is approximately 20a to 30a, preferably b is approximately 22a to 28a, more preferably b is approximately 24a to 26a, and a is approximately 6h to 10h, preferably a is approximately 7h to 9h. In this case, when a and h are not designed within these ranges, if a and h are designed excessively small, the amount of incident light is insufficient; and if a and h are designed excessively large, the material and space are wasted while the amount of incident light is not increased. In addition, in the overall structure after the light introducing medium 1 and the optical waveguide glass window are assembled, the distance a is small, and the distance h is small, so that the occupied area is small, thereby being convenient for arrangement and use.

In a specific embodiment, the relationship between the size design of the light introducing medium 1 (i.e., distance a and distance h) and the distance b required for light propagation in the optical waveguide medium layer 2 satisfies: h: a: b≈1: 8: 200. This size design of the light introducing medium 1 enables the light emitted by the light emitting source 3 to be introduced into the optical waveguide medium layer 2 with maximum efficiency.

For example, if the distance b required for light propagation in the optical waveguide medium layer 2 is 600 mm, the distance a between the third surface and the fourth surface 104 of the light introducing medium 1 is about 25 mm, and the distance h between the first surface 102 and the second surface 103 of the light introducing medium 1 is about 3 mm. That is, the width of the light introducing medium 1 is 24 mm, and the height of the light introducing medium 1 is 3 mm. The light introducing medium 1 with such a size can introduce the light emitted by the LED light source into the optical waveguide medium layer 2 with maximum efficiency.

Referring to FIG. 10, in an embodiment, the vehicle window panel further includes an outer glass layer 5. The second main surface 202 is connected to the outer glass layer 5 via the first adhesive layer 6. The outer glass layer 5 is closer to the outside of the vehicle, and the optical waveguide medium layer 2 is closer to the interior of the vehicle. When the light source emits light, it can be observed from outside of the vehicle that the light reflection patterned layer 203 is bright.

Optionally, the first adhesive layer 6 includes but is not limited to polyethylene vinyl acetate.

Referring to FIGS.16 and 17, FIGS.16 and 17 respectively show structural schematic views of vehicle window panel assemblies in another two embodiments of the present application. Compared to the structure shown in FIG. 10, in an embodiment, a vehicle window panel assembly includes the vehicle window panel in any of the embodiments described above, and a covering component 8. The covering component 8 is configured to cover the outside of the light introducing medium 1 and the light emitting source 3. As such, the light introducing medium 1 and the light emitting source 3 are shielded and protected by the covering component 8.

Referring to FIG. 16, optionally, the covering component 8 is fixed on the first main surface 201 of the optical waveguide medium layer 2 through bonding with a second adhesive layer 9.

Referring to FIG. 17, in another embodiment, one side of the covering component 8 is fixed on the first main surface 201 of the optical waveguide medium layer 2 through bonding with the second adhesive layer 9, and the other side of the covering component 8 is fixed on the second surface 103 of the light introducing medium 1 through bonding with the second adhesive layer 9. This design can reduce the occupied area of the first main surface 201 of the optical waveguide medium layer 2, and the structure is compact.

### Embodiment 5

Referring to FIG. 10 and FIG. 15, in an embodiment, a vehicle includes the vehicle window panel assembly in any one of the above embodiments.

According to the vehicle, the light introducing medium 1 includes the first surface 102 and the second surface 103 disposed parallel to each other, the light introducing medium 1 is closely connected to the first main surface 201 through the first surface 102, and the connection portion of the first main surface 201 connected to the first surface 102 is parallel to the first surface 102. As such, when the light from the light emitting source 3 enters the light introducing medium 1, the light introducing medium 1 can guide the light from the light emitting source 3 to be incident into the optical waveguide medium layer 2, so that the light propagates in the optical waveguide medium layer 2. The propagated light is reflected when irradiated on the light reflection patterned layer 203 prepared in advance, and the light reflection patterned layer 203 is illuminated to achieve the lighting or atmosphere effects. Accordingly, by the cooperation of the light reflection patterned layer 203 with the light introducing medium 1 and the light waveguide medium layer 2, the atmospheric or lighting effects are achieved. In addition, the structure of the light introducing medium 1 is simplified, the processing difficulty is reduced, and the production efficiency is improved. The installation on the first main surface 201 of the optical waveguide medium layer 2 has a good stability, and the incident efficiency of light from the light emitting source 3 is improved.

In addition, compared to introducing light from the end face, the end portion, or the cut face of the third glass layer in the related technology, the present light introducing medium 1 achieves the same light introducing effect.

In addition, under achieving the same function, the two-piece sandwich structure product with the light introducing medium 1 can replace the three-piece sandwich product in the related technology, thereby reducing the weight of product, reducing the utilization of resource, and greatly reducing the manufacturing costs.

The above-described embodiments are only several implementations of the present application, but they should not be construed as limiting the scope of the present application. Any equivalent changes and modifications made by those of ordinary skill in the art without departing from the concept and principle of the present application all fall within the protection scope of the present application.

## Claims

1. A light incidence structure configured to guide light into an optical waveguide medium layer, the optical waveguide medium layer having at least a first main surface for light incidence, the light incident structure comprising:
a light introducing medium, at least portion of the light introducing medium being formed on the first main surface of the optical waveguide medium layer by curing, such that the at least portion of the light introducing medium is a part of the optical waveguide medium layer, and the light introducing medium having at least one incident surface for light incidence; and a light emitting source, wherein light emitted by the light emitting source enters the light introducing medium through the incident surface, and the light enters the optical waveguide medium layer from the first main surface after being refracted by the light introducing medium.

2. The light incidence structure according to claim 1, wherein the light introducing medium is a protruding structure located on the first main surface of the optical waveguide medium layer.

3. The light incidence structure according to claim 2, wherein the first main surface is a flat surface or a curved surface.

4. The light incidence structure according to claim 2, wherein the optical waveguide medium layer has a second main surface opposite to the first main surface, a light reflection portion is disposed on the second main surface, and the light entering the optical waveguide medium layer is reflected at the light reflection portion.

5. The light incidence structure according to claim 4, wherein the light reflection portion is in a preset pattern.

6. The light incidence structure according to claim 1 or 2, wherein the incident surface is a flat surface, a convex mirror surface, or a concave mirror surface.

7. The light incidence structure according to claim 1 or 2, wherein a refractive index of the light introducing medium is equal to a refractive index of the optical waveguide medium layer or is within a preset range.

8. The light incidence structure according to claim 7, wherein a visible light transmittance of the light introducing medium is greater than or equal to a visible light transmittance of the optical waveguide medium layer.

9. The light incidence structure according to claim 1 or 2, wherein the light introducing medium is integrally formed with the optical waveguide medium layer.

10. The light incidence structure according to claim 1 or 2, wherein the light introducing medium is formed by curing a liquid with a viscosity on the optical waveguide medium layer.

11. The light incidence structure according to claim 10, wherein the light incidence structure further comprises a cover plate, the cover plate has a first end and a second end opposite to each other, the first end of the cover plate is connected to the optical waveguide medium layer, the second end of the cover plate is inclined in a direction away from the optical waveguide medium layer, and the light introducing medium is located between the cover plate and the optical waveguide medium layer;
the incident surface is located between the second end of the cover plate and the optical waveguide medium layer, or the incident surface is located between a position adjacent to the second end of the cover plate and the optical waveguide medium layer.

12. The light incidence structure according to claim 11, wherein the light emitting source is disposed on the optical waveguide medium layer and adjacent to the incident surface.

13. A vehicle window, comprising an optical waveguide medium layer, an outer glass layer, and the light incidence structure according to any one of claims 1 to 12, wherein the optical waveguide medium layer has a first main surface and a second main surface opposite to each other, the light incidence structure is disposed on the first main surface, and the outer glass layer is connected to the second main surface.

14. The vehicle window according to claim 13, further comprising a first adhesive layer, the first adhesive layer being bonded between the outer glass layer and the second main surface.

15. A vehicle window panel, comprising:
an optical waveguide medium layer having a first main surface and a second main surface opposite to each other, and a light reflection patterned layer being provided on the first main surface and/or the second main surface;
a light introducing medium comprising a first surface and a second surface disposed parallel to each other, the light introducing medium being closely connected to the first main surface through the first surface, and a connection portion of the first main surface connected to the first surface being parallel to the first surface;
a light emitting source located at one end of the light introducing medium, light from the light emitting source enters the light introducing medium, and the light introducing medium is configured to introduce the light from the light emitting source into the optical waveguide medium layer.

16. The vehicle window panel according to claim 15, wherein the light introducing medium further comprises a third surface and a fourth surface disposed opposite to each other, the light emitting source is disposed adjacent to the third surface, and the light from the light emitting source enters the light introducing medium through the third surface; and
the third surface and the fourth surface are each disposed as a flat surface or a curved surface.

17. The vehicle window panel according to claim 15, wherein an optical isolation layer and/or a thermal insulation film layer is disposed on the first main surface and/or the second main surface of the optical waveguide medium layer.

18. The vehicle window panel according to any one of claims 15 to 17, wherein the connection portion of the first main surface connected to the first surface has a transparent region, and the transparent region represents a connection portion of the first main surface without any additional treatment.

19. The vehicle window panel according to claim 15, wherein the light introducing medium is integrally formed with the optical waveguide medium layer; or
the light introducing medium and the optical waveguide medium layer are manufactured separately and assembled with each other.

20. The vehicle window panel according to claim 15 or 19, wherein the light introducing medium is fixedly connected to the optical waveguide medium layer via a curable liquid; the liquid is an optically clear adhesive or an optically clear resin; a refractive index of the liquid is in a range from 1.45 to 1.65; a visible light transmittance of the liquid is in a range from 90% to 99.9%; and a haze of the liquid is equal to or less than 5%.

21. The vehicle window panel according to claim 15, wherein the light introducing medium and the optical waveguide medium layer are made of a same glass material; and/or the glass material is inorganic glass or organic glass.

22. The vehicle window panel according to claim 15, wherein a refractive index of the light introducing medium is in a range from 1.45 to 1.65; a light transmittance of the light introducing medium is in a range from 80% to 99.9%; and a haze of the light introducing medium is equal to or less than 5%.

23. The vehicle window panel according to claim 15, wherein the light introducing medium is connected to at least one side of the optical waveguide medium layer; and/or the light introducing medium is in a shape of a long strip or an arc strip.

24. The vehicle window panel according to claim 15, wherein a light propagation distance of the optical waveguide medium layer is defined as b, a distance between the third surface and the fourth surface of the light introducing medium is defined as a, and a distance between the first surface of the light introducing medium and the first main surface of the optical waveguide medium layer is defined as h; where b = 20a to 30a, and a = 6h to 10h.

25. The vehicle window panel according to claim 24, wherein h: a: b = 1: 8: 200.

26. The vehicle window panel according to claim 15, further comprising an outer glass layer; and the second main surface is connected to the outer glass layer via a first adhesive layer.

27. A vehicle window panel assembly, comprising the vehicle window panel according to any one of claims 15 to 26, and a covering component configured to cove outside of the light introducing medium and the light emitting source.

28. A vehicle, comprising the vehicle window according to claim 13 or 14, or the vehicle window panel according to any one of claims 15 to 26.
